# EUROPEAN PATENT APPLICATION

(11) **EP 4 570 776 A1**
(43) Date of publication of application: **18.06.2025**
(21) Application number: 22940371.2
(22) Date of filing: 21.07.2022
(51) Int. Cl.: C04B 35/66, C04B 18/16, C04B 28/04, C04B 28/06, C04B 16/06, C04B 14/36, C04B 103/30, C04B 103/44, C04B 111/00

(54) **SPRAY-APPLIED FIREPROOF COVERING COMPOSITION RECYCLED FROM ACIDIC/NEUTRAL WASTE REFRACTORIES**

(30) Priority: 25.04.2022 KR 20220050943
(71) Applicant: Bangsan Co., Ltd, Seoul 06097 (KR); Bang, Je Il, Seoul 06097 (KR)
(72) Inventor: BANG, Je Il, Seoul 06097 (KR)
(74) Representative: Botti & Ferrari S.p.A.
(86) International application number: PCT/KR2022/010716
(87) International publication number: WO 2023/210877

(57) **Abstract**

The present invention relates to a spray applied fireproof covering composition recycled from non-ferrous waste materials, characterized by comprising: 10 to 80 wt % of non-ferrous waste aggregate; 5 to 55 wt % of binder; 5 to 35 wt % of heat-absorbing material; 0.3 to 1.7 wt % of organic fibers; 0.5 to 3.5 wt % of setting accelerator; 0.1 to 0.7 wt % of thickening agent; 0.1 to 0.9 wt % of fluidity agent; and 0.05 to 0.15 wt % of air-entraining agent (A.E.). By recycling non-ferrous waste bricks, which are primarily disposed of in shared waters after being used as refractory bricks in steel plants, as a major component of the spray applied fireproof covering composition, this invention contributes to resource conservation and environmental protection by reducing waste. Furthermore, it prevents the collapse of structures due to explosive spalling of concrete during fires in construction and civil engineering sites and mitigates the risk of collapse in steel structures under high temperatures. The smaller voids provide excellent thermal insulation at high temperatures, and when applied to damaged areas of existing concrete structures, it exhibits a reinforcing effect through structural strength enhancement.

## Description

### [FIELD OF THE INVENTION]

The present invention relates to a Spray applied fireproof covering composition, and more particularly, to Spray applied fireproof covering composition that recycles acid-neutral waste fireproof materials.

### [BACKGROUND OF THE INVETION]

Currently, with the increase in the development of super high-rise buildings, large-scale complex facilities, underground spaces, and tunnels, as well as the expansion of regulatory systems, the market for fire-resistant coating materials and fireproof spray materials has been growing by more than 12% annually.

When examining the effects of temperature on concrete during a fire, dehydration starts at around 250°C, calcium hydroxide decomposes and releases crystallization water at 450-500°C, calcium carbonate begins to decompose at 600-700°C, and at 900°C, the complete dehydration of cement paste occurs. When concrete is exposed to high temperatures, its properties, such as compressive strength and modulus of elasticity, degrade, and this degradation becomes more severe as the temperature rises, potentially leading to structural collapse. Moreover, when concrete is exposed to extreme heat, a phenomenon known as spalling, in which the surface layer peels off and scatters, may occur. In such cases, the structural integrity of the building can be significantly damaged, potentially leading to rapid collapse. Large-scale fires can take an extended time to extinguish, which can result in severe damage. One method of providing fire resistance against such large fires is to spray a certain thickness of fire-resistant mortar onto the concrete members to protect them.

In general, various types of refractory materials are used as lining or repair materials in steel mills, including blast furnaces, TLCs (Torpedo Laddle Cars), ladles, converters, vacuum degassing facilities (Ruhrstahl Heraeus), tundishes, reheating furnaces, and electric furnaces, tailored to the operational characteristics of each facility. Refractory materials for steelmaking are primarily generated in large quantities during ironmaking and steelmaking processes when transporting or handling molten metal. After a certain period of use, most of these refractory materials are discarded, and only a small portion (approximately 5-6%) is recycled as raw refractory material.

In South Korea, companies that recycle waste refractory materials typically collect the waste, remove surface impurities, and sell it as refractory raw material. However, this recycled refractory material is mainly reused for steelmaking purposes. Consequently, the recycling of this refractory material is limited, and to meet demand, low-cost products are imported, leading to frequent quality degradation issues.

### [CONTENTS OF THE INVENTION]

### [PROBLEM TO BE SOLVED]

The present invention aims to solve the aforementioned conventional issues. The objective of the present invention is to provide a Spray applied fireproof covering composition that recycles amphoteric waste refractory materials discarded from steel mills into refractory insulating aggregates, thereby improving the recycling rate and conserving resources.

Another objective of the present invention is to provide a Spray applied fireproof covering composition that recycles amphoteric waste refractory materials by including them in a spray-type hydraulic refractory mortar composition, which can be utilized for both construction and civil engineering, offering excellent refractory performance, compressive strength, and durability.

### [SOLUTION TO THE PROBLEM]

To achieve the objectives described above, the spray applied fireproof covering composition according to one embodiment of the present invention comprises: 10 to 80 weight percent(wt)% of amphoteric waste refractory fine aggregate; 5 to 55 wt% of binder; 5 to 35 wt% of heat-absorbing material; 0.3 to 1.7 wt% of organic fiber; 0.5 to 3.5 wt% of accelerator; 0.1 to 0.7 wt% of thickener; 0.1 to 0.9 wt% of fluidizer; and 0.05 to 0.15 wt% of air-entraining agent (A.E.).

In the spray applied fireproof covering composition according to one embodiment of the present invention, the amphoteric waste refractory fine aggregate may include one or more selected from Al-Si-C, plate, infiltrated material, general castable alumina, and T/D alumina.

In one embodiment of the present invention, the amphoteric waste refractory fine aggregate may comprise 10 to 30 wt% of Al-Si-C, 10 to 30 wt% of plate, 10 to 30 wt% of infiltrated material, 10 to 30 wt% of general castable alumina, and 10 to 30 wt% of T/D alumina.

In one embodiment of the present invention, the amphoteric waste refractory fine aggregate may be crushed to have a particle size of 4 mm or less.

In one embodiment of the present invention, the binder may include one or more selected from Portland cement or alumina cement.

In one embodiment of the present invention, the melting point of the refractory mortar manufactured from the composition may be 1200°C or higher, and it may resist damage for 3 hours at 1200°C.

In one embodiment of the present invention, the heat-absorbing material may include one or more selected from lime, gypsum, and aluminum hydroxide.

In one embodiment of the present invention, the organic fiber may include one or more selected from polypropylene, acrylic, rayon, vinylon, or polyethylene fiber.

In one embodiment of the present invention, the accelerator may include one or more selected from cement-based minerals, aluminate-based compounds, silicate-based compounds, or alkali-free compounds.

In one embodiment of the present invention, the thickener may include one or more selected from methyl cellulose or polyvinyl acetate.

### [EFFECTS OF THE INVENTION]

According to the spray applied fireproof covering composition that recycles amphoteric waste refractory materials in the present invention, the amphoteric waste refractory bricks, which are typically discarded in landfills after being used as furnace refractory bricks in steel mills, are recycled as the main component of hydraulic refractory mortar for spraying. This reduces the amount of waste refractory materials, contributing to resource conservation and environmental protection.

Furthermore, the spray applied fireproof covering composition that recycles amphoteric waste refractory materials according to the present invention not only prevents the collapse of structures by preventing explosive spalling of concrete during fire outbreaks at construction and civil engineering sites, but also prevents the risk of deformation of steel structures during high-temperature fires.

Although lightweight refractory materials tend to lose insulation properties at high temperatures due to large internal pores, the Spray applied fireproof covering composition that recycles amphoteric waste refractory materials in the present invention retains good insulation performance at high temperatures due to its small internal pores. Additionally, when applied to damaged parts of existing concrete structures, it demonstrates structural strength, providing repair and reinforcement effects.

### [BRIEF DESCRIPTION OF DRAWINGS]

Figures 1a to 1d are inspection reports of the quality of the regenerated fine aggregate of amphoteric waste refractory materials used in the spray applied fireproof covering composition according to one embodiment of the present invention.
Figure 2 is an inspection report of the quality of the refractory mortar made from the spray applied fireproof covering composition that recycles amphoteric waste refractory materials according to one embodiment of the present invention.
Figures 3 to 17 show test reports for the results of the test items in Tables 1 and 2 in the spray applied fireproof covering composition that recycles amphoteric waste refractory materials according to one embodiment of the present invention.

### [DETAILED DESCRIPTION OF THE INVENTION]

Hereinafter, some embodiments of the present invention will be described in detail with reference to the accompanying illustrative drawings. When assigning reference numerals to the components of each drawing, it should be noted that the same components are assigned the same reference numerals wherever possible, even if they are shown in different drawings. Additionally, when describing the embodiments of the present invention, detailed explanations of known configurations or functions that may hinder understanding of the embodiments are omitted if deemed necessary.

Furthermore, in describing the components of the embodiments of the present invention, terms such as first, second, A, B, (a), (b), etc., may be used. These terms are intended merely to distinguish one component from another and do not limit the nature, order, or sequence of the respective components. It should be understood that when a component is described as being "connected," "coupled," or "linked" to another component, the component may be directly connected or linked to that other component, or there may be other components "connected," "coupled," or "linked" between the respective components.

Below, the Spray applied fireproof covering composition that recycles amphoteric waste refractory materials according to one embodiment of the present invention will be described with reference to the accompanying drawings.

The spray applied fireproof covering composition that recycles amphoteric waste refractory materials according to one embodiment of the present invention may comprise 10 to 80 wt% of amphoteric waste refractory fine aggregate, 5 to 55 wt% of binder, 5 to 35 wt% of heat-absorbing agent, 0.3 to 1.7 wt% of organic fiber, 0.5 to 3.5 wt% of quick-setting agent, 0.1 to 0.7 wt% of thickening agent, 0.1 to 0.9 wt% of fluidity agent, and 0.05 to 0.15 wt% of an air-entraining agent (A.E.). Preferably, the spray applied fireproof covering composition that recycles amphoteric waste refractory materials may include 45 wt% of amphoteric waste refractory fine aggregate, 31 wt% of binder, 20 wt% of heat-absorbing agent, 1 wt% of organic fiber, 2 wt% of quick-setting agent, 0.4 wt% of thickening agent, 0.5 wt% of fluidity agent, and 0.1 wt% of an air-entraining agent (A.E.).

However, the user may change and delete some of the mentioned compositions as needed according to the situation. For instance, if only fire resistance is required, the proportion of amphoteric waste refractory fine aggregate may be increased up to 80 wt%, while the proportions of other compositions may be decreased. In other words, users can flexibly adapt to the on-site conditions and adjust or delete the proportions of the compositions accordingly.

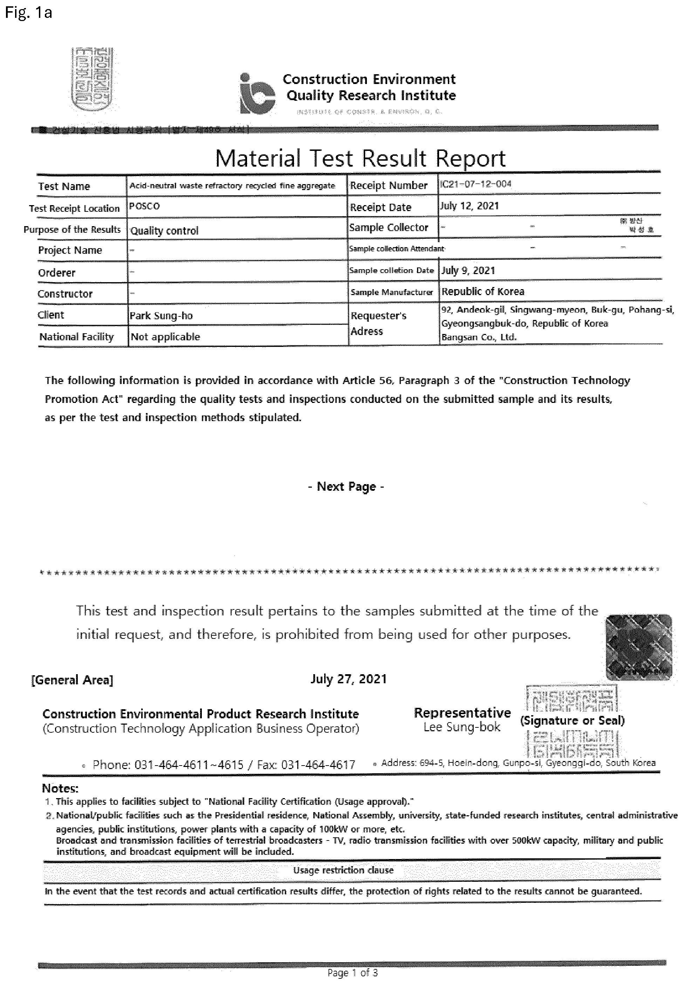

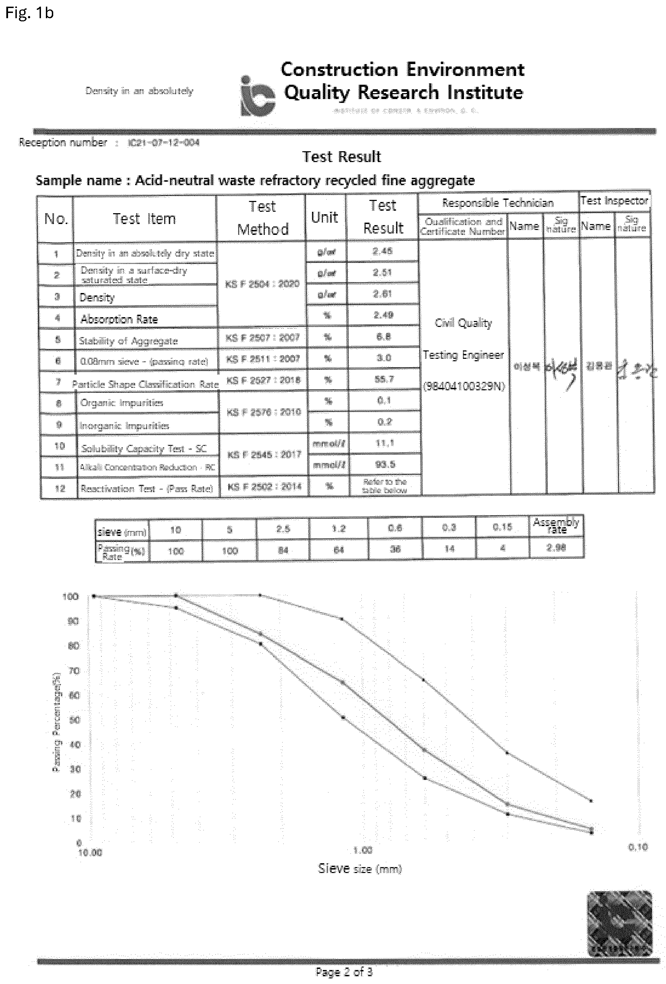

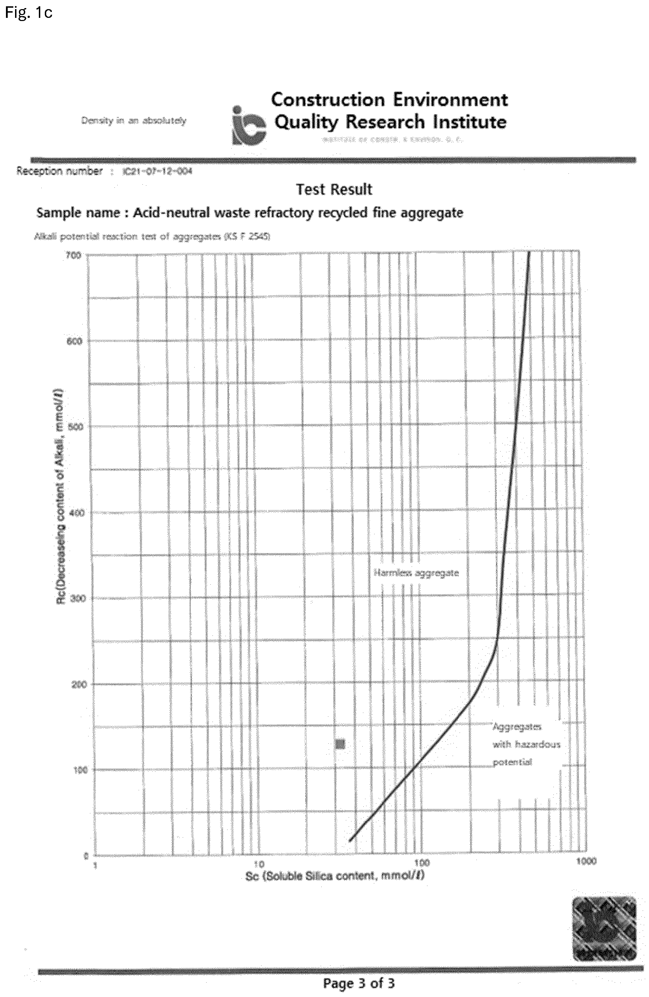

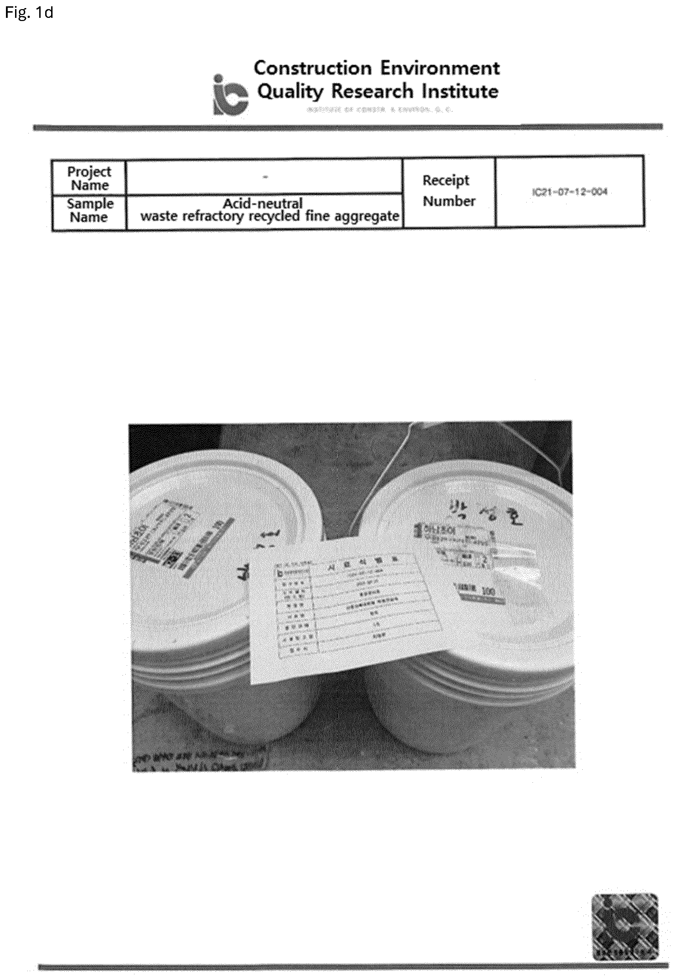

Figures 1a to 1d are inspection reports on the quality of the recycled amphoteric waste refractory fine aggregate used in the Spray applied fireproof covering composition according to one embodiment of the present invention. Referring to Figures 1a to 1d, the test results indicate that the quality of the recycled amphoteric waste refractory fine aggregate is suitable for use in civil engineering or construction.

**[Table 1]**

| | F.C. (wt%) | SiO₂ (wt%) | Al₂O₃ (wt%) | Fe₂O₃ (wt%) | CaO (wt%) | MgO (wt%) | Etc. (wt%) |
|---|---|---|---|---|---|---|---|
| Al-Si-C | 14.3 | 20.7 | 59.5 | 1.4 | 0.7 | 1.7 | 1.7 |
| Plate | 4.1 | 9.8 | 80.0 | 0.7 | 0.3 | - | 5.1 |
| Inflow material | - | 0.7 | 91.5 | 0.8 | 1.0 | 3.2 | 2.8 |
| Common Castable Alumina | - | 1.1 | 88.2 | 0.2 | 1.3 | 7.2 | 2.0 |
| T/D Alumina | - | 34.0 | 63.0 | 0.8 | 1.2 | 0.4 | 1.4 |

The above table 1 shows the types and components of the recycled amphoteric waste refractory raw materials used in the spray applied fireproof covering composition according to one embodiment of the present invention.

Referring to table 1, the amphoteric waste refractory fine aggregate may include one or more of Al-Si-C, Plate, inflow material, general castable alumina, and T/D alumina. Additionally, the amphoteric waste refractory fine aggregate may contain 10 to 30 wt% of Al-Si-C, 10 to 30 wt % of Plate, 10 to 30 wt% of inflow material, 10 to 30 wt% of general castable alumina, and 10 to 30 wt% of T/D alumina. It is preferable for the composition to include 20 wt% of Al-Si-C, 20 wt% of Plate, 20 wt% of inflow material, 20 wt% of general castable alumina, and 20 wt% of T/D alumina. In other words, the amphoteric waste refractory fine aggregate can be mixed in a ratio of 1:1:1:1:1 for Al-SiC, Plate, inflow material, general castable alumina, and T/D alumina. However, the amphoteric waste refractory fine aggregate is not limited to the mentioned proportions and can be mixed in various ratios to satisfy performance requirements.

It is preferable for the amphoteric waste refractory fine aggregate to be crushed to have a particle size of 4 mm or less.

**[Table 2]**

| Number | Sample name | Weight ratio | | | Melting point (°C) |
|---|---|---|---|---|---|
| | | 1 | 2.9 | 0.1 | |
| 1 | 1P | Portland cement | Inflow material | Fly ash | 1,770 |
| 2 | 2A | Alumina cement | Inflow material | Fly ash | 1,790 |
| 3 | 3P | Portland cement | Fine aggregate | Fly ash | 1,280 |
| 4 | 4A | Alumina cement | Fine aggregate | Fly ash | 1,480 |
| 5 | NCS | Portland cement | Common Castable Alumina | Fly ash | 1,300 |
| 6 | PLA | Portland cement | Plate | Fly ash | 1,230 |
| 7 | TDA | Portland cement | T/D Alumina | Fly ash | 1,300 |
| 8 | ANCS | Alumina cement | Common Castable Alumina | Fly ash | 1,580 |
| 9 | APLA | Alumina cement | Plate | Fly ash | 1,650 |
| 10 | ATDA | Alumina cement | T/D Alumina | Fly ash | 1,530 |
| 11 | PCA | Portland cement | Al-Si-C | Fly ash | 1,200 |
| 12 | ACA | Alumina cement | Al-Si-C | Fly ash | 1,520 |

**[Table 3]**

| Number | Sample name | Cement | | Fine aggregate | Carbon dioxide | Other admixtures | Melting point (°C) |
|---|---|---|---|---|---|---|---|
| 13 | A-2 | Portland cement | | Fine aggregate | Carbon dioxide | Other admixtures | 1,460 |
| | | 30 wt% | | 45 wt% | 20 wt% | 5 wt% | |
| 14 | B-2 | Alumina cement | | Fine aggregate | Carbon dioxide | Other admixtures | 1,460 |
| | | 30 wt% | | 45 wt% | 20 wt% | 5 wt% | |
| 15 | C-2 | Portland cement | Alumina cement | Fine aggregate 45 wt% | Carbon dioxide 20 wt% | Other admixtures5 wt% | 1,435 |
| | | 15 wt% | 15 wt% | | | | |

Referring to table 1, the main component of the amphoteric waste refractory fine aggregate is alumina (Al₂O₃), which occupies a significant portion, along with some SiO₂, indicating that it is an aggregate with excellent refractory performance. Accordingly, as shown in tables 2 and 3, the refractoriness of the refractory mortar manufactured from each amphoteric waste refractory fine aggregate was measured using a simple basic mix of hydraulic refractory mortar. The term "fine aggregate" is a shortened expression for amphoteric waste refractory fine aggregate.

Whether using alumina cement or Portland cement, it has been demonstrated that refractory mortar can be produced with all aggregates possessing a melting point and refractoriness exceeding 1200°C.

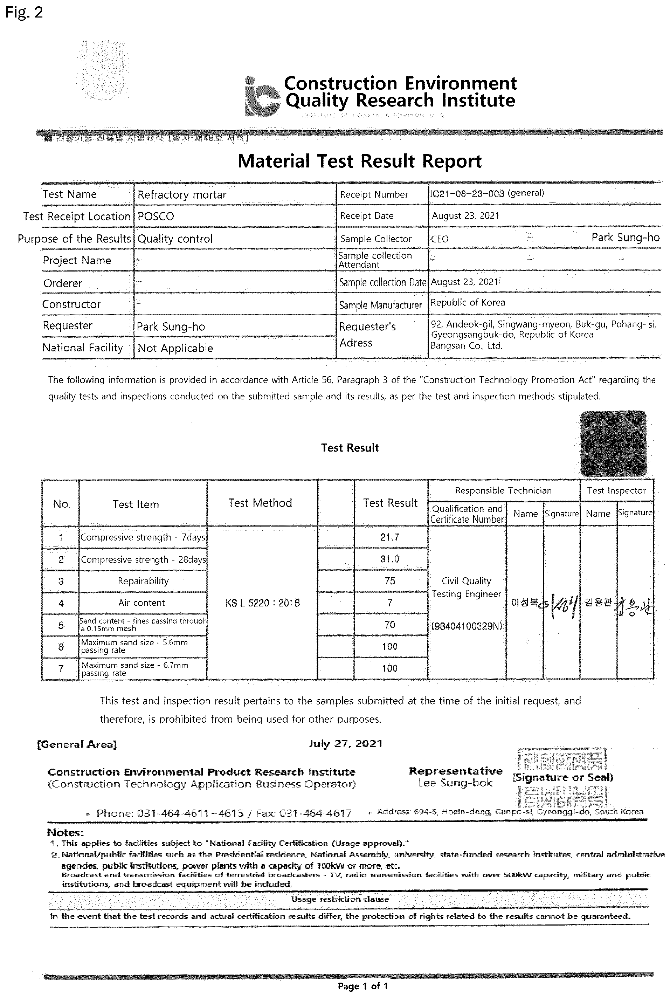

Figure 2 is a report on the quality of the refractory mortar composed of the Spray applied fireproof covering composition recycled from amphoteric waste according to one embodiment of the present invention. Referring to Figure 2, the quality inspection results of the Spray applied fireproof covering composition manufactured by mixing fine aggregates, heat-absorbing materials, and other admixtures show sufficient refractory performance, with compressive strength and repairability suitable for civil engineering applications. Here, KSL 5220 refers to the testing of types of dry cement mortars that comply with standards (for spray plastering, general plastering, masonry, flooring).

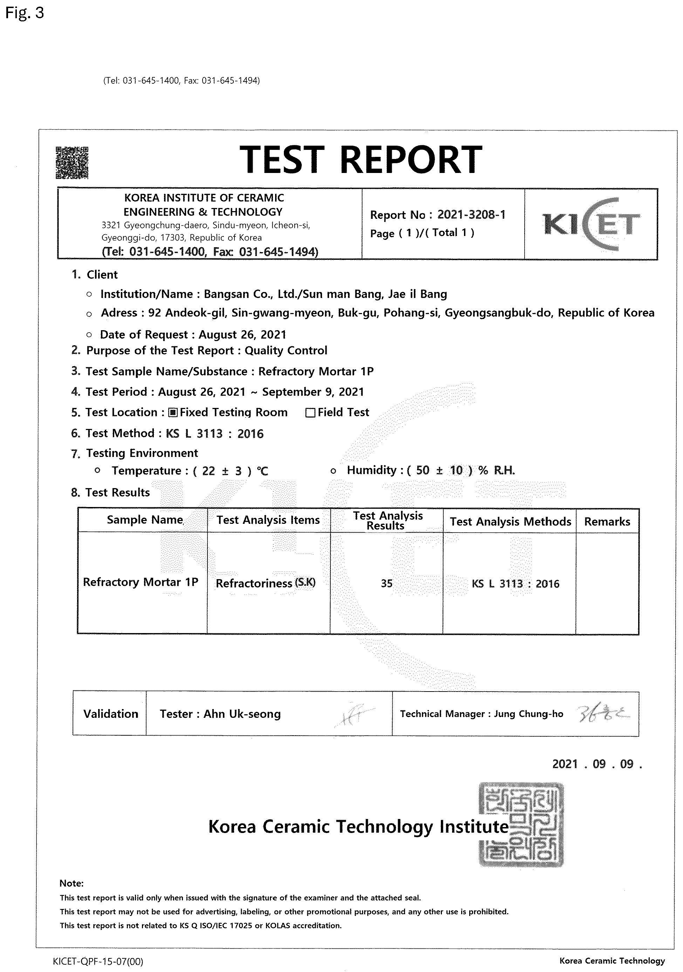

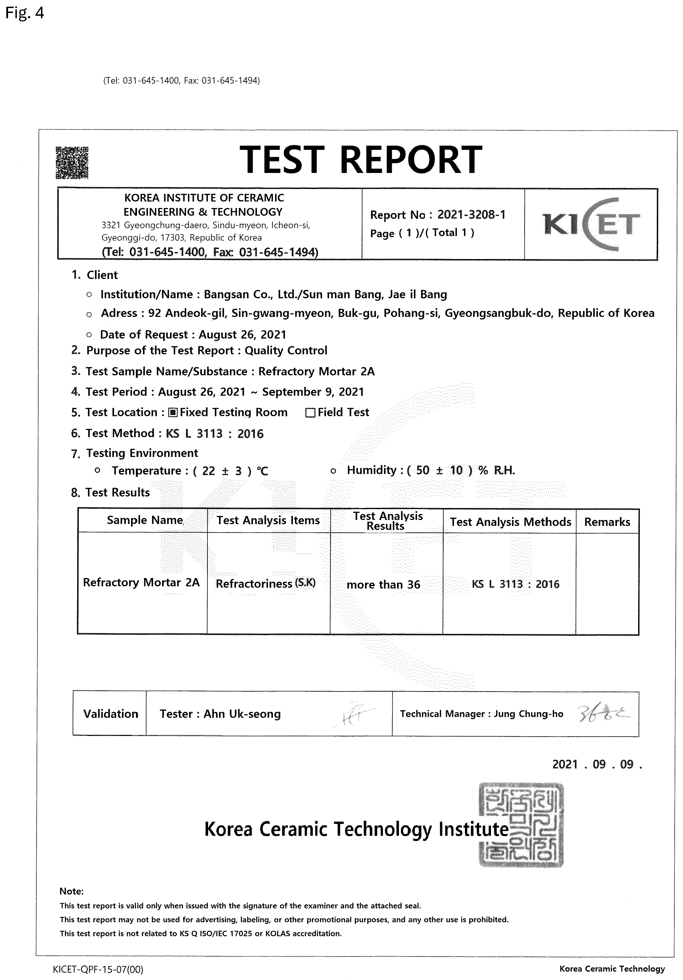

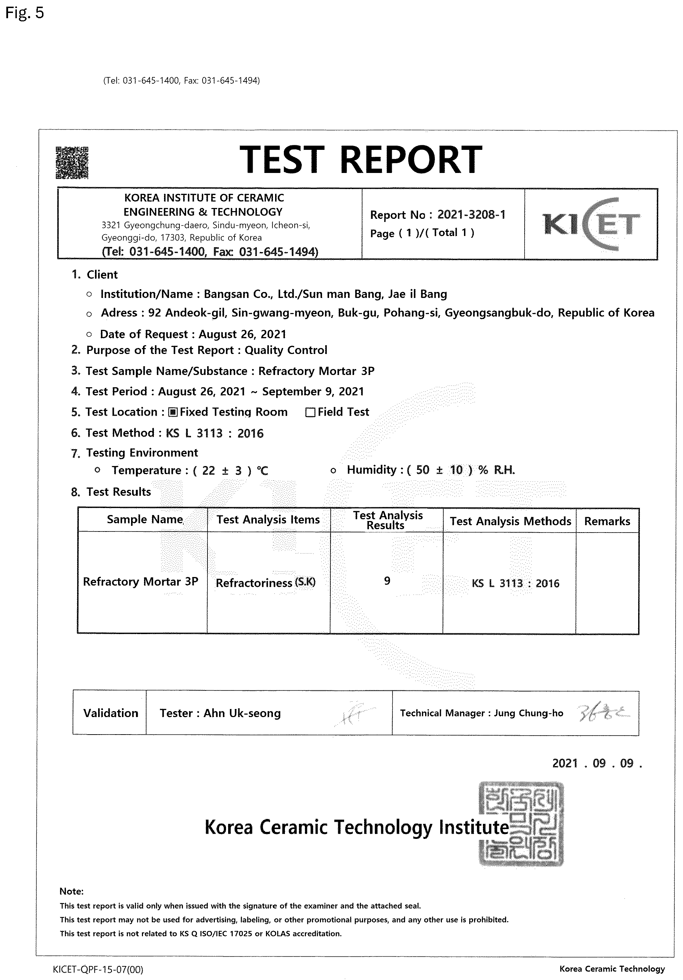

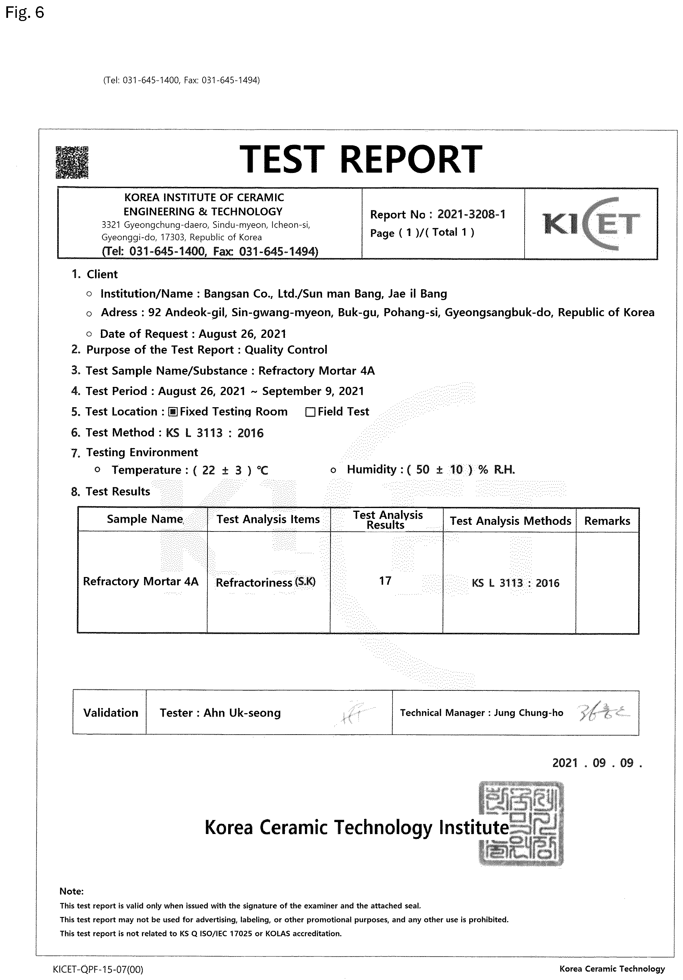

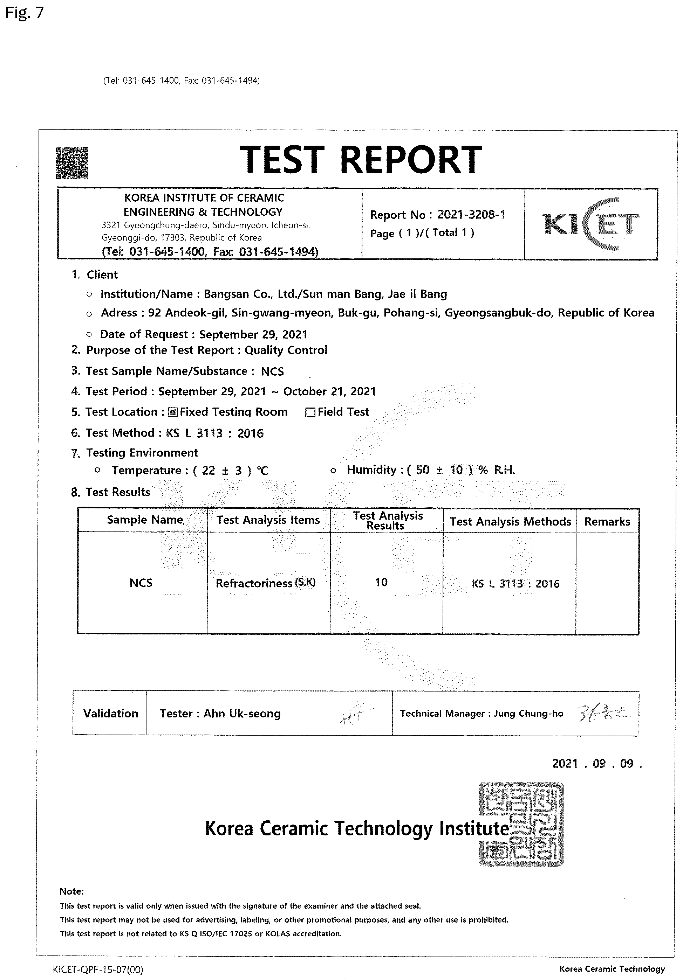

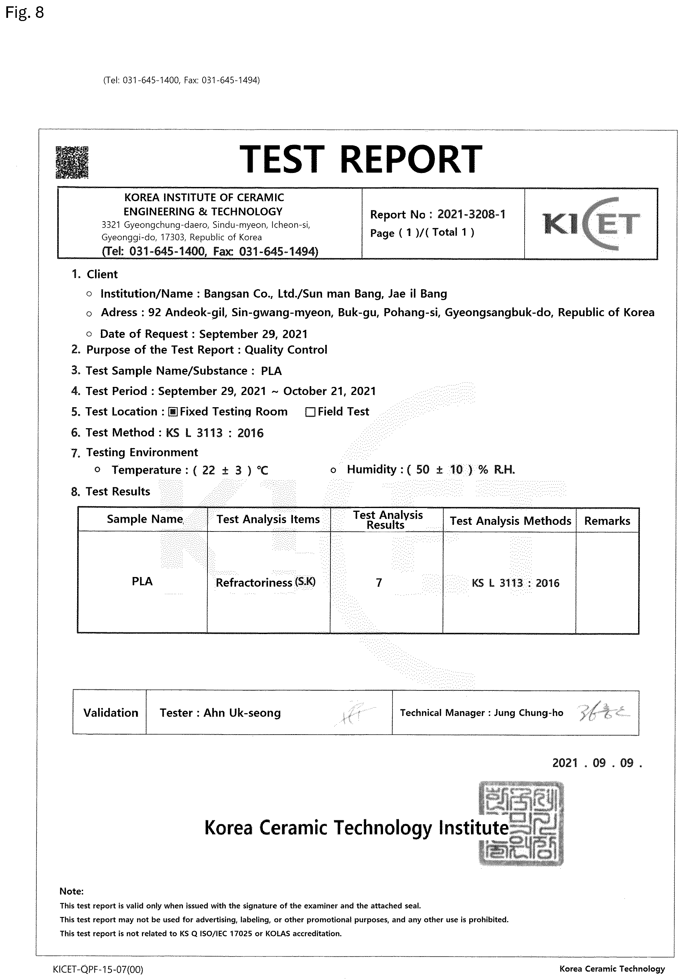

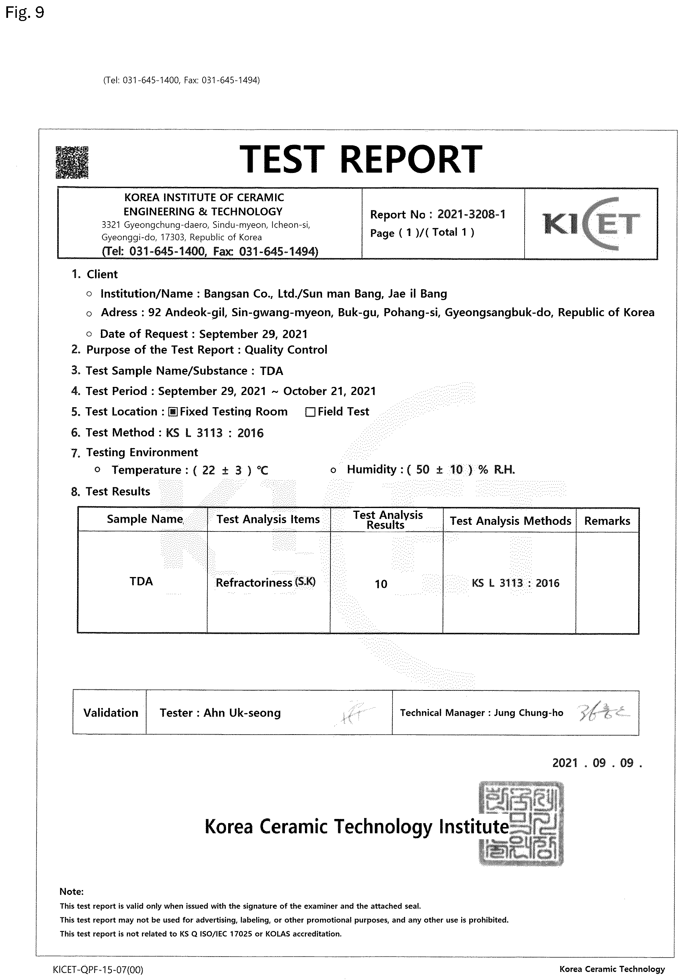

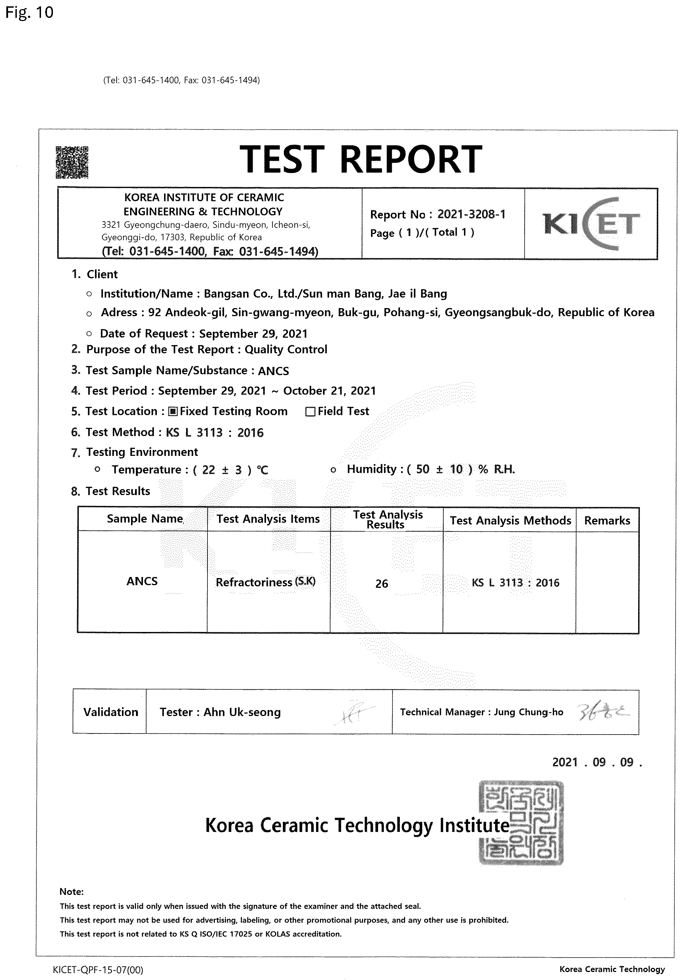

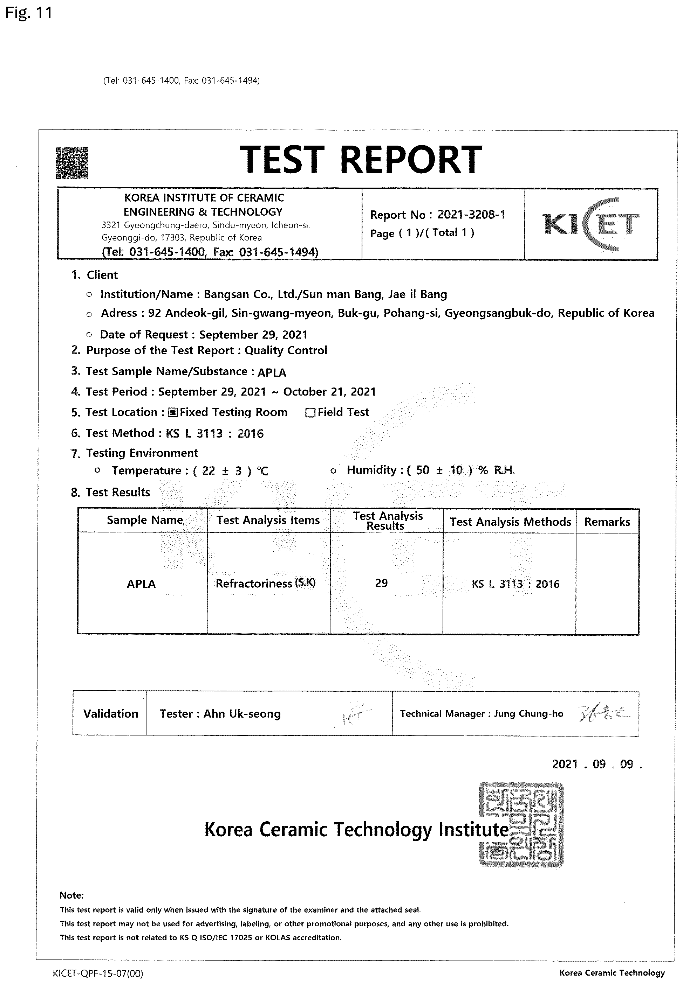

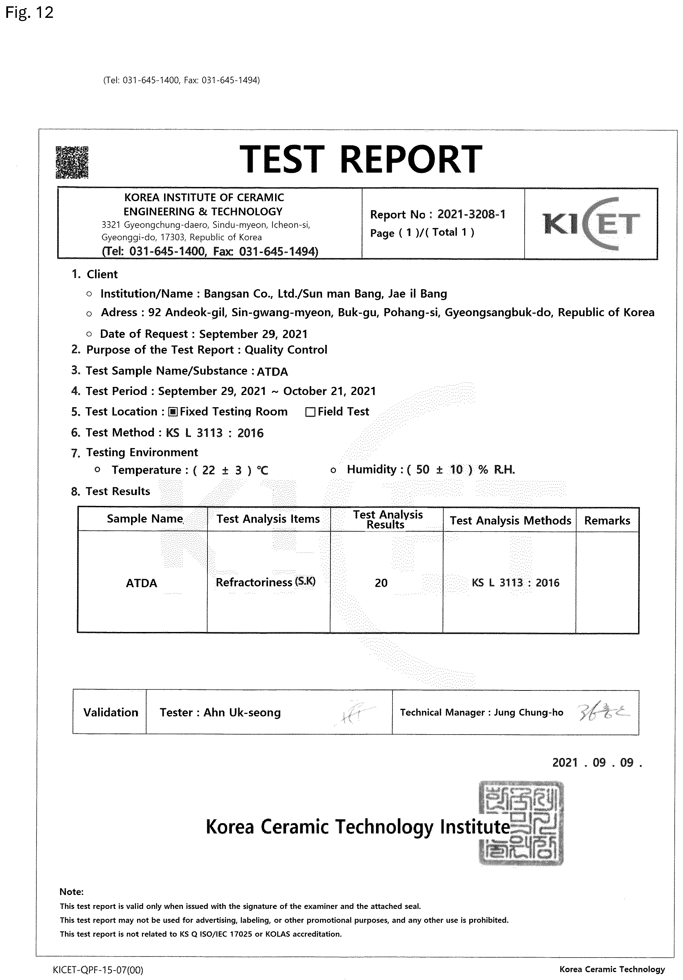

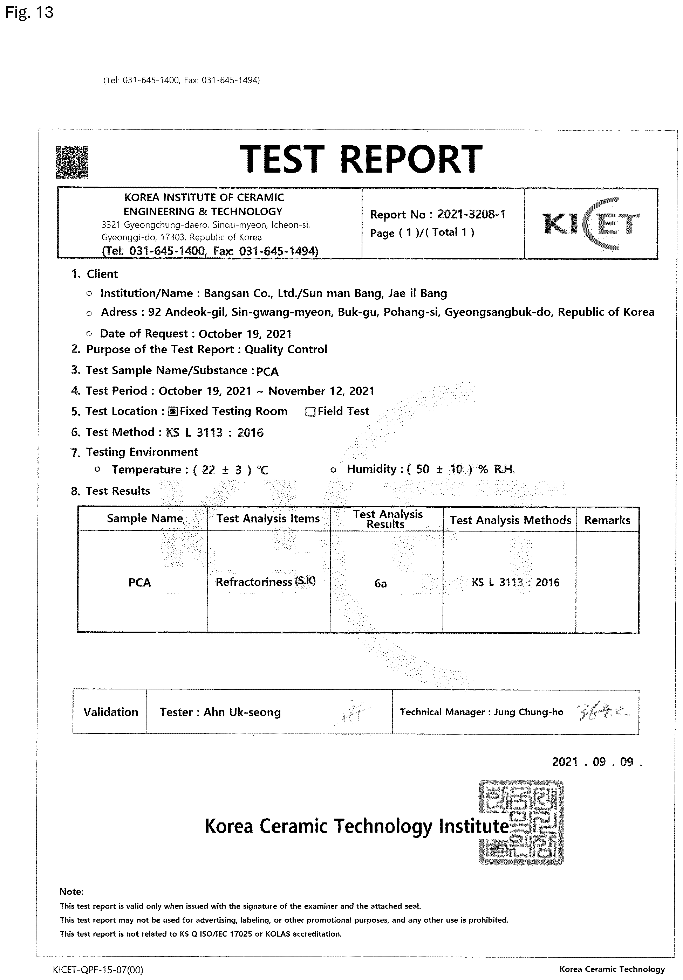

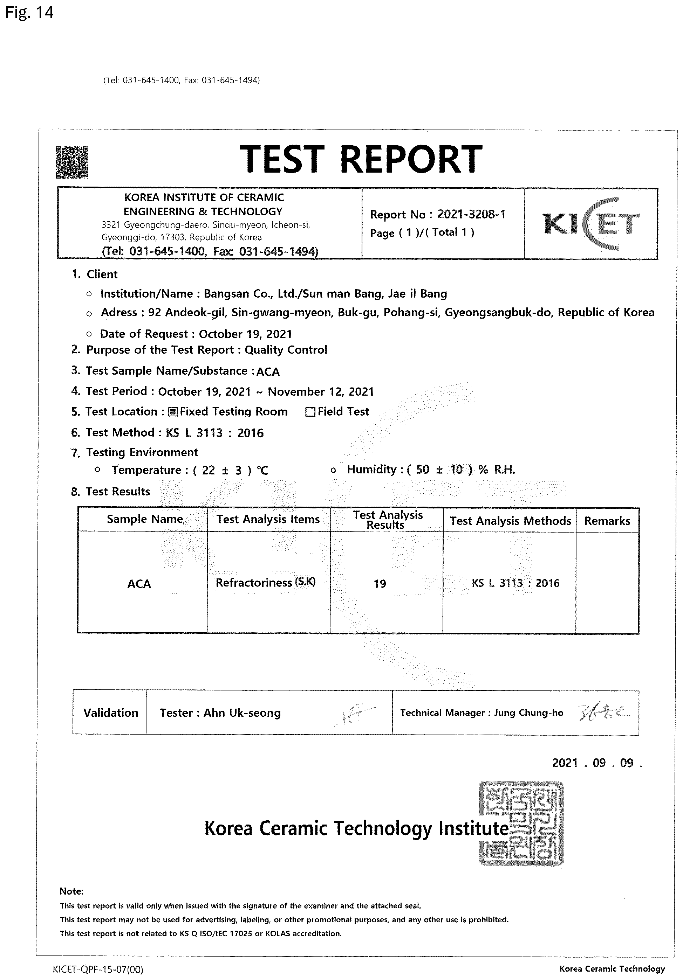

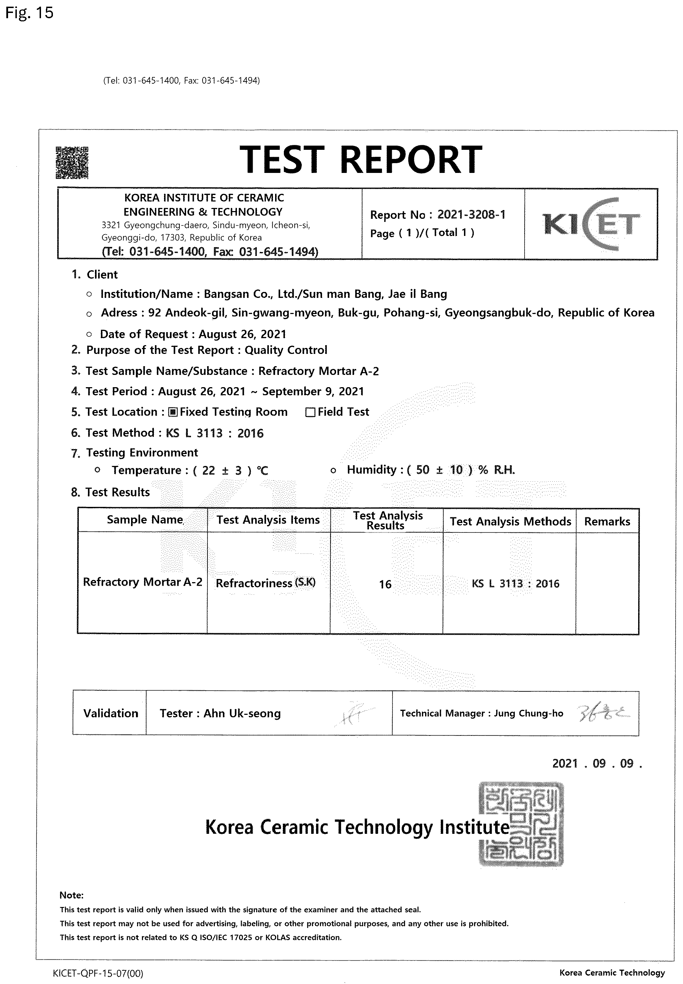

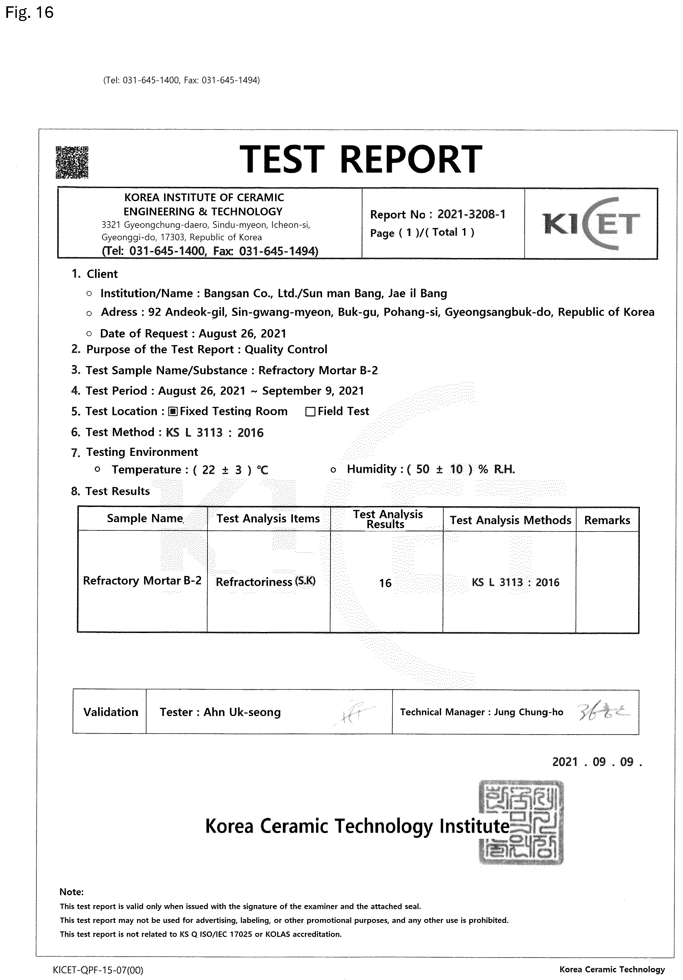

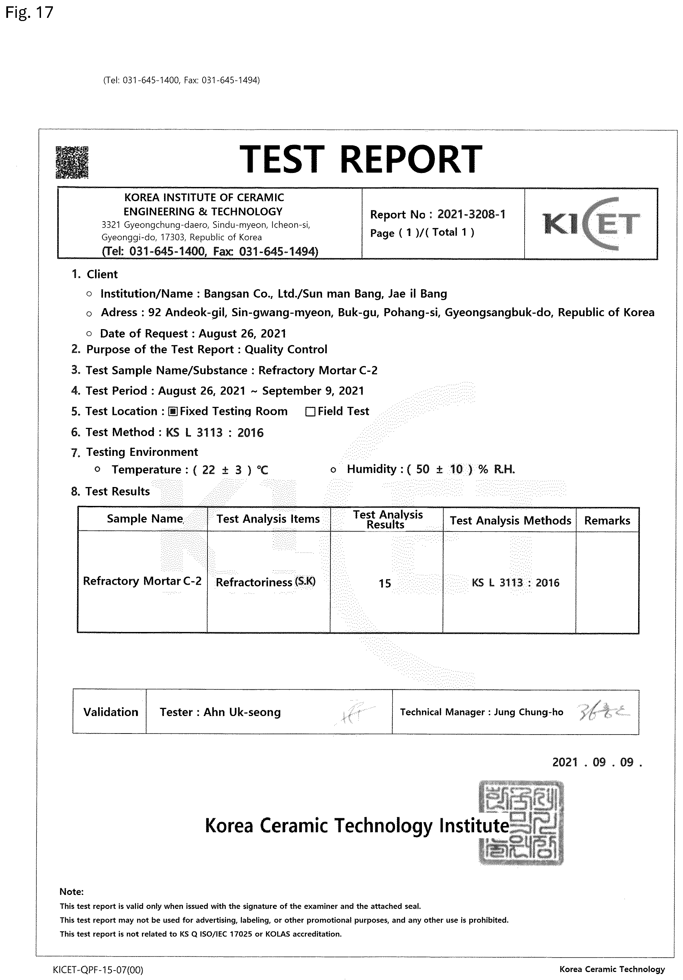

Figures 3 to 17 are test reports showing the results of the items in tables 1 and 2 regarding the refractory mortar made from the Spray applied fireproof covering composition recycled from amphoteric waste according to one embodiment of the present invention. Here, figure 3 represents the refractoriness of the refractory mortar made from the composition corresponding to No. 1 in table 2, figure 4 represents the refractoriness of the refractory mortar corresponding to No. 2 in table 2, and figure 15 represents the refractoriness of the refractory mortar corresponding to No. 13 in Table 3. The other figures from 3 to 17 represent the refractoriness of the refractory mortar made from compositions corresponding to the numbers of Tables 2 or 3 by subtracting 2 from the figure numbers.

Referring to figures 3 to 17, the refractory mortar according to one embodiment of the present invention can possess excellent refractoriness with a melting point exceeding 1200°C, regardless of the type of aggregate used in the composition.

As the amphoteric waste refractory fine aggregate has been described above, it will not be reiterated.

The binding agent may be one or more of Portland cement or alumina cement, as indicated in Tables 2 and 3. The cement is used to enhance adhesion and strength, and can be selected from types of hydraulic cement, including ordinary Portland cement, white Portland cement, alumina cement, high early strength Portland cement, and ultrahigh strength cement. In one embodiment of the present invention, Portland cement or alumina cement can be used as the binding agent.

When using a large amount of cement, the adhesion and strength of the refractory coating improve, but the density and thermal conductivity increase, reducing the thermal resistance effect. Moreover, the increased amount of hydration products results in a significant amount of steam generation when exposed to high heat, raising the possibility of explosive spalling during fires. Conversely, if too little is used, there is a risk of explosive spalling, along with reduced density and thermal conductivity, which can weaken the adhesion and strength, making it challenging to expect sufficient strength as a refractory lining. Considering these points, it is effective to use cement in the range of 5 to 55 weight% of the total solid composition. Ideally, the binding agent can comprise 31 weight% of cement.

The heat-absorbing agent is included in the refractory coating to absorb heat by releasing water of crystallization or carbon dioxide during a fire, thereby reducing the rapid temperature rise of the internal concrete and coating. The heat-absorbing agent enhances the effects of the present invention and may include compounds such as limestone aggregate, medium lime, and quicklime, gypsum types such as anhydrite and semi-hydrated gypsum, and aluminum hydroxide, preferably using 5 to 35 wt%, most ideally 20 wt%.

The organic fiber may include one or more of polypropylene, acrylic, rayon, vinyl, or polyethylene fibers.

The organic fiber effectively increases the bonding force of the composition during construction, preventing initial detachment or cracking, and contributes to strength enhancement at low temperatures after curing. During a fire, the fiber melts at a relatively low temperature around 170°C, creating numerous voids within the refractory coating, which provides a pathway for moisture movement. Consequently, it reduces the vapor pressure and thermal stress in the refractory coating and the concrete surface layer, preventing surface delamination and explosive spalling. The organic fiber exhibits excellent insulation and fire resistance without damaging the refractory coating during a fire, while rapidly discharging gases such as steam generated from heating, thus preventing the increase of vapor pressure inside the concrete and refractory lining, safeguarding the concrete structure from destruction.

Using too much organic fiber can increase volume, leading to reduced material strength, while too little can result in reduced pathways for moisture movement during a fire, potentially causing coating detachment or explosive spalling, thus risking loss of functionality as a refractory lining. Considering these factors, it is preferable to use organic fiber in the range of 0.3 to 1.7 wt%, with 1 wt% being the most ideal.

The quick-setting agent is used to accelerate the setting of the binding agent, providing initial strength and preventing sagging of the composition. In one embodiment of the present invention, a quick-setting agent is necessary for achieving particularly high early strength and quick setting times. The quick-setting agent may include one or more of cement mineral-based, aluminate-based, silicate-based, or alkali-free types. It is preferable to use approximately 0.5 to 3.5 wt% of the quick-setting agent for adhesion performance, with 2 wt% being the most ideal.

The thickening agent maintains the viscosity that facilitates construction in a slurry state and provides initial bonding strength after construction, stabilizing the coating layer before the hydration of the hydraulic binder progresses, thus preventing sagging. In one embodiment of the present invention, organic thickening agents, such as methyl cellulose or polyvinyl acetate, can be used, and an amount of 0.1 to 0.7 wt% is adequate considering economic viability and functionality, with 0.5 wt% being the most ideal.

The fluidity agent, one of the admixtures, is added to improve workability and reduce setting time, and in one embodiment of the present invention, it is preferable to use 0.1 to 0.9 wt% of the fluidity agent, with 0.5 wt% being the most ideal.

The A.E. (Air-Entraining Agent) is a chemical admixture used to create fine, independent bubbles within concrete to improve workability and freeze-thaw resistance. In one embodiment of the present invention, it is preferable to use the A.E. agent in the range of 0.05 to 0.15 wt%, with 0.1 wt% being the most ideal.

Although referred to as the A.E. agent, it may include pure A.E. agents along with some other additives depending on user intent.

The refractory mortar manufactured from the Spray applied fireproof covering composition recycled from amphoteric waste according to one embodiment of the present invention has a melting point of over 1200°C and can prevent damage at 1200°C for three hours.

The above description provides only one embodiment for implementing the Spray applied fireproof covering composition recycled from amphoteric waste according to the present invention, and the invention is not limited to the aforementioned embodiment. It is to be understood that anyone with ordinary knowledge in the relevant technical field can modify and implement the technical spirit of the invention without deviating from the scope of the claims outlined below.

## Claims

1. A spray applied fireproof covering composition recycled from non-ferrous waste materials, comprising:
10 to 80 wt% of non-ferrous waste aggregate;
5 to 55 wt% of binder;
5 to 35 wt% of heat-absorbing material;
0.3 to 1.7 wt% of organic fibers;
0.5 to 3.5 wt% of setting accelerator;
0.1 to 0.7 wt% of thickening agent;
0.1 to 0.9 wt% of fluidity agent; and
0.05 to 0.15 wt% of A.E. (Air Entraining agent).

2. The composition of claim 1,
wherein the non-ferrous waste aggregate comprises at least one of Al-Si-C, Plate, inflow material, general castable alumina, and T/D alumina.

3. The composition of claim 1,
wherein the non-ferrous waste aggregate comprises:
10 to 30 wt% of Al-Si-C;
10 to 30 wt% of Plate;
10 to 30 wt% of inflow material;
10 to 30 wt% of general castable alumina; and
10 to 30 wt% of T/D alumina.

4. The composition of claim 1,
wherein the non-ferrous waste aggregate is crushed to a particle size of 4 mm or less.

5. The composition of claim 1,
wherein the binder comprises at least one of Portland cement or alumina cement.

6. The composition of claim 1,
wherein the refractory mortar made from the composition has a melting point of 1200°C or higher and is resistant to damage for 3 hours at 1200°C.

7. The composition of claim 1,
wherein the heat-absorbing material comprises at least one of limestone, gypsum, and aluminum hydroxide.

8. The composition of claim 1,
wherein the organic fibers comprise at least one of polypropylene, acrylic, rayon, vinylon, or polyethylene fibers.

9. The composition of claim 1,
wherein the setting accelerator comprises at least one of cement mineral-based, aluminate-based, silicate-based, or alkali-free materials.

10. The composition of claim 1,
wherein the thickening agent comprises at least one of methyl cellulose or polyvinyl acetate.
